# DEMANDE DE BREVET EUROPEEN

(11) **EP 2 706 290 A1**
(43) Date de publication de la demande: **12.03.2014**
(21) Numéro de dépôt: 13306210.9
(22) Date de dépôt: 04.09.2013
(51) Int. Cl.: F21V 21/002, F21V 21/34, H01R 25/14, H02G 5/04

(54) **Poutre comportant des conducteurs électriques et système d'électrification utilisant de telles poutres**

(30) Priorité: 08.09.2012 FR 1258426; 24.12.2012 FR 1262759
(71) Demandeur: CQFD Composites, 68270 Wittenheim (FR)
(72) Inventeur: Chauzu, Franck, 67210 Obernai (FR)
(74) Mandataire: Ocvirk, Philippe

(57) **Abrégé**

Poutre électrifiée (1), à vocation structurelle, comprenant un profilé (10) en matériau composite pultrudé ou extrudé, la poutre assurant à la fois une fonction mécanique, une fonction de protection feu et et une fonction d'électrification par l'intégration de conducteurs électriques au sein de la matière du profilé, sous forme d'un ou plusieurs inserts (20) totalement noyés dans la matière, non accessibles, ou partiellement noyés dans ladite matière.

Application à un système d'électrification utilisant de telles poutres électrifiées, assemblées mécaniquement et connectées électriquement entre elles.

## Description

La présente invention concerne une poutre comportant des conducteurs électriques ainsi que diverses applications d'une telle poutre pour réaliser des systèmes d'électrifications divers, en particulier susceptibles de supporter des appareils électriques fixés sur ces poutres et connectés électriquement à celles-ci. Par poutre, on comprendra dans ce mémoire tout élément structurel allongé présentant une rigidité et une résistance mécanique, notamment en flexion, suffisante pour assurer en plus du support de son propre poids le support de charges externes sans déformation rédhibitoire pour l'usage qui en est prévu.

On connaît déjà des systèmes se présentant sous la forme générale d'une poutre et intégrant des conducteurs électriques, raccordés sur une source de courant, et sur lesquels il est possible de fixer et de connecter électriquement divers appareils consommateurs d'électricité.

Dans certains systèmes, on utilise pour former la poutre un élément structurel en matériau qui assure une certaine résistance mécanique mais qui est électriquement conducteur, par exemple de l'acier ou de l'aluminium. Les conducteurs disposés à l'intérieur de cet élément structurel métallique en sont maintenus espacés, et espacés entre eux, par un matériau isolant tel qu'une matière plastique ou un ciment minéral ou synthétique, qui sert également à maintenir en place les conducteurs.

Ces systèmes sont généralement conçus pour supporter leur propre poids sur des longueurs relativement importantes, typiquement de quelques mètres, mais ils ne sont pas prévus pour constituer en eux-mêmes une poutre de résistance mécanique suffisante pour supporter des charges importantes qui y seraient fixées. De plus, ces systèmes sont très difficilement utilisables en extérieur ou en milieux humides car l'étanchéité de ces systèmes est très délicate et onéreuse à réaliser, dans la mesure ou ces systèmes présentent généralement des zones ouvertes prédéfinies permettant d'accéder aux éléments conducteurs sans percer le matériau porteur conducteur. Ces systèmes ne présentent de surcroit pas de tenue particulière au feu en cas d'incendie.

Comme indiqué par exemple dans FR2725847, ces zones ouvertes peuvent être des fenêtres situées dans des endroits prédéfinis, mais ne permettent alors l'accès aux conducteurs qu'à ces endroits. FR2164472 décrit aussi un système similaire, mais ou les fenêtres permettant de connecter un appareil sur les barres conductrices du système sont de dimensions suffisamment réduites pour ne pas autoriser le passage d'un doigt, et donc assurer ainsi une certaine sécurité. Quel que soit le cas, cela implique une structure où il est nécessaire de former ces fenêtres ou passages répartis tout le long de ladite structure.

Il est aussi connu, par exemple par US2006207778 ou US7819676, d'utiliser des profilés creux, dans lesquels les conducteurs électriques sont maintenus isolés l'un de l'autre et présentant une ouverture longitudinale continue, qui permet alors l'accès aux conducteurs en n'importe quel point du système. Ces profilés comportent couramment une sorte de bavette déformable qui obture l'ouverture longitudinale pour assurer une certaine étanchéité, mais qui permet cependant l'accès aux conducteurs en se déformant localement. Mais l'étanchéité n'est alors plus assurée, ou au moins plus aussi bien.

Par ailleurs, on connaît aussi, par exemple par US-20100186346, WO-2006116417 ou US-7518060, diverses utilisations de poutres sous forme de profilés creux, notamment en matériau composite pultrudé, qui permettent d'y passer des câbles électriques pour les dissimuler tout en profitant de l'isolation électrique complémentaire résultant de la matière composite. Ces profilés permettent aussi d'y fixer divers appareillages électriques, notamment des points d'éclairage, qui peuvent ainsi être reliés de manière étanche aux conducteurs passant à l'intérieur des profilés. Ces poutres ne sont pas considérées comme « électrifiées » au sens de l'invention.

Il a aussi été proposé, par FR1403035 ou BE594790, d'enrober des conducteurs électriques dans du béton moulé sous forme de poutre pour constituer des éléments de construction rigide et isolants. BE438278 et BE508132 décrivent l'enrobage de conducteurs par de la bakélite pour former des éléments rigides de diverses longueurs, connectables entre eux pour réaliser circuits électriques. Ces anciennes techniques présentaient cependant l'inconvénient d'une mise en oeuvre délicate nécessitant de couler chaque élément séparément en maintenant les conducteurs séparés pendant la coulée.

US-2005150158 et US-2009064571 décrivent une structure de clôture en composite et fibre de verre pultrudé, mais flexible pour pouvoir être conditionnée en rouleaux et conformée selon le terrain. Il est prévu d'intégrer des conducteurs électriques dans l'épaisseur de la clôture pour de la basse tension d'éclairage ou autre.

WO-00/30406 décrit un procédé de fabrication de profilés composites pultrudés de diverses sections, incorporant aussi des conducteurs électriques, mais cette fois destinés à constituer des éléments chauffants.

Ainsi, on connaît déjà, comme indiqué dans les documents cités dans les trois paragraphes précédents, des éléments structurels en matériau composite pultrudé incorporant des conducteurs, soit dans des cavités formées dans ces éléments structurels, soit directement dans la matière de ces éléments. Mais dans un cas il s'agit d'éléments structurels de type profilés creux ne servant finalement que de gaine pour des câbles électriques qui doivent être glissés dans les profilés lors de leur utilisation. Dans l'autre cas, les conducteurs sont intégrés dans la matière, lors de la fabrication, mais alors les produits obtenus n'ont pas de rigidité ou de résistance mécanique intrinsèque ou ont seulement une résistance propre limitée, sans pouvoir servir de poutres ayant une fonction première de support de charges externes et souvent permanentes, et pouvant être utilisées en environnement présentant un risque d'incendie.

En effet, dans aucun des exemples cités précédemment, les éléments électrifiés ne répondent à un besoin de protection au feu, c'est-à-dire soit à la nécessité de pouvoir conserver leur tenue mécanique pendant une durée donnée, de l'ordre de 30, 60 voir 120 minutes en présence d'un incendie, soit de garantir une faible contribution au feu (faible propagation de la flamme, faible contribution calorifique,...).

La présente invention a pour objectif de proposer une nouvelle utilisation des profilés composites réalisés par pultrusion pour fabriquer des poutres électrifiées, assurant une protection feu, qui puisent être utilisées comme éléments de construction, en tant que poutres rigides présentant une résistance mécanique élevée, susceptible de supporter des charges externes importantes, permanentes ou non, bien supérieures aux charges générées par le propre poids de ces profilés, et qui servent d'élément de distribution électrique dans l'installation tout en garantissant une tenue en feu, que ce soit en environnement intérieur ou extérieur humide.

Avec ces objectifs en vue, l'invention a pour objet une poutre électrifiée, à vocation structurelle, comprenant un profilé en matériau composite pultrudé, la poutre assurant à la fois une fonction mécanique, une fonction de protection feu et une fonction d'électrification par l'intégration de conducteurs électriques au sein de la matière du profilé, sous forme d'un ou plusieurs inserts conducteurs, qui peuvent être totalement noyés dans la matière, non accessibles, ou seulement partiellement noyés dans ladite matière.

L'idée de l'invention est donc de profiter des propriétés isolantes et structurelles des profilés composites réalisés par pultrusion pour fabriquer des poutres de longueur variable quasiment non limitée, à vocation structurelle, non corrosives, pouvant être intrinsèquement électrifiées et présentant de par les matériaux utilisés une protection feu permettant d'obtenir des classement feu de type E30, E60 ou E120 (maintien des propriétés électriques et mécaniques pendant 30, 60 ou 120 mn)ou de type A, B ou C selon les Euroclass en vigueur (caractérisation de la réaction et contribution au feu).

L'invention peut donc être vue comme une poutre, en tant qu'élément destiné à porter des charges externes conséquentes, qui est de plus électrifiée, mais aussi comme un câble électrique rigide qui présente une résistance mécanique nettement supérieure à celle qui serait requise pour en faire un simple câble autoporteur.

L'intégration des conducteurs électriques au sein de la matière du profilé composite résout également un problème d'étanchéité rencontré dans des systèmes électriques installés en extérieur ou en environnement potentiellement humide.

Un autre avantage important, tenant à l'utilisation d'un matériau composite est qu'un tel matériau comporte, outre la résine, une proportion importante de fibres isolantes, typiquement des fibres de verre ou de basalte, résistantes à des températures élevées, et qui permettent donc d'assurer une isolation électrique entre les conducteurs noyés dans le matériau composite, même si la résine vient à perdre ses capacités isolantes suite à une température trop élevée, typiquement en cas d'incendie. Cette capacité d'isolation électrique résultant de la présence des fibres dans le matériau composite enrobant les conducteurs électriques peut être encore renforcée par l'utilisation de résines inorganiques résistant à des températures élevées.

Ainsi, le choix de la résine, des fibres et de leur répartition dans le profilé par rapport aux conducteurs électriques permet de garantir, pendant une durée cible, une tenue mécanique et un fonctionnement électrique, grâce aux capacités intrinsèques d'isolation électrique des matériaux utilisés, fibres et résine, et grâce au maintien à distance entre eux des conducteurs électriques qui résulte de la subsistance de ces matériaux, même après de longues périodes d'expositions à des températures très élevées.

Les profilés peuvent être pleins ou creux, et comporter accessoirement des cavités destinées à transporter d'autres fluides (eau, air, etc). Avantageusement, ils disposent de repères pour localiser soit les inserts conducteurs, soit des zones de fixation autorisées.

Les profilés sont en matériau composite préférentiellement réalisé par mélange de fibres de renforts inorganiques, notamment de fibres de verre ou de basalte par exemple, et d'une matrice inorganique, incorporant éventuellement d'autres matériaux isolants : plastique, bois, etc.

En variante, les profilés sont en matériau composite réalisé par mélange de fibres de renforts inorganiques, notamment de fibres de verre ou de basalte par exemple, et d'une matrice thermoplastique obtenue par voie réactive, c'est-à-dire dont la polymérisation s'effectue in situ au milieu des fibres de renfort. Dans le cas du choix d'une résine thermoplastique, les profilés peuvent être recouverts d'une couche externe de protection feu.

Cette technologie offre la possibilité d'obtenir des taux de fibres extrêmement importants de l'ordre de 50 à 75% en volume et donc de faciliter le maintien en positon des inserts conducteurs et de réduire considérablement la quantité de résine combustible présente dans le profilé.

De façon préférentielle, la résine sera choisie dans la famille des polyamides ou des polyméthacrylates de méthyle.

Les inserts conducteurs peuvent être noyés, totalement ou partiellement, dans la masse de la matière composite au moment de la fabrication du profilé par pultrusion. Lorsque les inserts ne sont pas totalement noyés, ils peuvent être affleurants, ou légèrement proéminents par rapport à la surface de la matière composite, à l'intérieur ou vers l'extérieur du profilé.

Selon un autre mode de réalisation, un pré-profilé est formé par pultrusion, ménageant des logements pour les inserts, et les inserts sont positionnés après l'étape de pultrusion, puis recouverts de matière plastique ou composite isolante par co-extrusion. Dans ce cas, le positionnement des inserts est plus précis et garanti par la première structure formée par pultrusion. Préférentiellement, la couche composite isolante recouvre à la fois les inserts et tout le pourtour du pré-profilé.

Selon une disposition particulière, les inserts seront disposés de manière symétrique dans la section du profilé, pour éviter d'éventuels problèmes de dilatation différentielle entre des matériaux de différentes natures, tels que fibre de verre et cuivre par exemple, qui induiraient sous l'effet de la température, une courbure non souhaitable de la poutre.

Par ailleurs, le positionnement des inserts dans la section du profilé pourra aussi contribuer à la rigidité mécanique du profilé, par exemple en disposant les inserts conducteurs dans les coins d'un profilé rectangulaire ou carré, etc.

Les inserts conducteurs sont préférentiellement en aluminium ou cuivre, ou encore en acier.

Les inserts conducteurs peuvent avoir une section pleine ou creuse, circulaire ou polygonale, en particulier carrée, rectangulaire aplatie, trapézoïdale, etc. Dans le cas d'une section creuse, typiquement de forme générale circulaire, cette section peut être ouverte, c'est-à-dire que la paroi des inserts comporte une fente longitudinale pour faciliter les connexions électriques comme on le verra par la suite.

Avantageusement les inserts conducteurs seront de faible épaisseur, de l'ordre de 1 à 6 mm d'épaisseur, pour pouvoir être enroulés sur des tourets d'un ou deux mètres de diamètre et dévidés en continus lors de la fabrication des poutres par pultrusion.

L'invention a aussi pour objet un système d'électrification utilisant des poutres électrifiées telles que définies précédemment, connectées électriquement entre elles, et pouvant être assemblées mécaniquement entre elles.

Différents modes d'assemblage mécanique des profilés et de connexion électrique des inserts pourront être utilisés, de même que différents systèmes de raccordement électrique sur les inserts, pour constituer un système d'électrification.

Selon une réalisation particulière, les profilés sont assemblés par des moyens de jonction assurant à la fois une liaison mécanique et la connexion électrique des inserts

En assemblage bout à bout, en alignement ou éventuellement en angle, les profilés pourront être assemblés rigidement par des manchons extérieurs recouvrant les extrémités adjacentes des deux profilés assemblés. Pour des profilés creux, on utilisera préférentiellement des pièces de liaison ou manchons intérieurs insérés dans les extrémités adjacentes des deux profilés. Préférentiellement, les jonctions entre profilés seront étanches.

Dans ces assemblages, les inserts conducteurs des deux profilés pourront être connectés automatiquement par emboîtement lors de la liaison des profilés. Les extrémités des inserts pourront être conformés pour recevoir une goupille de connexion, la section des inserts étant alors déterminée pour permettre un perçage axial pour l'insertion axiale d'une telle goupille de connexion. Ou les extrémités des inserts pourront être conformés pour pouvoir être emmanchés à l'intérieur d'une goupille creuse de connexion.

On pourra aussi utiliser une connectique rapportée pour relier électriquement les inserts des deux poutres assemblées bout à bout, indépendamment de la liaison mécanique des profilés.

Le raccordement d'appareillage électrique sur les poutres pourra être effectué par vissage au travers du profilé et des inserts conducteurs, ou par simple fixation sur les profilés et contact sur les inserts conducteurs avec pression maintenue, via des systèmes comprimés, de type ressort, exerçant en position une pression de contact permanente avec les inserts conducteurs.

Une connexion électrique pourra aussi être obtenue par champ magnétique, évitant une intrusion physique dans le profilé. Un avantage offert par le matériau composite est qu'il ne perturbe pas les champs magnétiques.

Quel que soit le mode de raccordement, il pourra être localisé en tout point le long des profilés.

Selon des dispositions complémentaires, les profilés selon l'invention seront intrinsèquement retardateurs de flamme (non propagateur de flamme) ou bien ils disposeront d'une couche de protection feu externe. Cette couche de protection contre le feu pourra être obtenue par co-extrusion de polymères présentant les propriétés barrières recherchées ou par une couche de peinture intumescente présentant la propriété anti-feu recherchée. La couche de protection pourra également être obtenue par une ou plusieurs couche de peinture incombustible (généralement de quelques dixièmes de millimètre d'épaisseur) formulée à base de géo polymère. Les geo polymères représentent une catégorie relativement nouvelle de matériau inorganique à base d'aluminosilicates activés alcalins qui sont réticulés en réseau tridimensionnel via des aluminates alcalins. Ces matériaux présentent un comportement exceptionnel à des températures supérieures à 1600°C créant en surface du profilé une couche de céramique résistante au feu et qui empêche l'accès de l'oxygène stoppant ainsi la combustion du profilé. Enfin, les profilés selon l'invention pourront être intrinsèquement incombustibles obtenus à partir de fibres inorganiques telles que des fibres de verre ou de basalte, et d'une matrice inorganique non combustible, formulée ou non à base de geo polymères pouvant conserver ses propriétés jusqu'à des températures de l'ordre de 1000°C.

L'invention a aussi pour objet le procédé de fabrication des poutres telles que définies précédemment. Selon une première méthode, les poutres sont fabriquées par pultrusion avec introduction in situ des inserts conducteurs dans la matière, c'est-à-dire que les conducteurs sont incorporés en continu dans la matière composite encore non finalisée (polymérisée, réticulée ou condensée selon les chimies de transformation utilisées) lors de la pultrusion.

Comme déjà évoqué précédemment, le procédé de fabrication peut aussi comprendre une étape de pultrusion d'un pré-profilé comportant des logements pour les inserts, une étape d'insertion des inserts conducteurs dans les logements, et une étape de co-extrusion dans laquelle de la matière isolante est injectée de manière à recouvrir les inserts, les trois étapes étant réalisées au défilé en continu sur une même ligne de fabrication.

Les applications de la poutre électrifiée selon l'invention couvrent tous les systèmes devant assurer à la fois une fonction mécanique, une protection contre le feu et une fonction d'électrification, principalement en extérieur où il existe également un besoin de résistance à la corrosion.

La poutre électrifiée selon l'invention pourra notamment être utilisée comme élément structurel électrifié résistant au feu pour le supportage et l'alimentation électrique d'appareils d'éclairage de tunnel.

Elle pourra aussi être utilisée comme élément structurel électrifié pour la réalisation de câbles anti-feu autoporteurs installés en zone à risque d'incendie (ascenseur, corridor recevant du public, etc.).

Elle pourra aussi être utilisée comme élément structurel par exemple pour la réalisation d'abri-bus avec affichage lumineux et panneaux solaires.

Elle pourra encore être utilisée comme support d'un revêtement de façade de bâtiment comportant à la fois des modules actifs (électrifiés), tels que des panneaux solaires, et optionnellement des modules passifs (non électrifiés) tels que des panneaux d'isolation thermique en mousse ou laine de roche, en particulier dans des opérations de rénovation de bâtiments pour en diminuer la consommation énergétique. Dans cette application, les poutres sont utilisées comme éléments structurels électrifiés de support et d'électrification desdits modules. En particulier, les poutres électrifiées pourront être assemblées bout à bout pour former des montants verticaux électrifiés, tous reliés par exemple à une ligne principale enterrée en bas de la façade. En variante, les poutres électrifiées seront pré-assemblées, optionnellement avec des profilés non électrifiés, pour former des cadres comportant chacun au moins un module actif ou passif, et les cadres sont assemblés ensuite sur site pour former le revêtement de façade, les cadres étant assemblés entre eux et reliés électriquement entre eux par connexion des poutres entre elles.

D'autres caractéristiques et avantages apparaîtront dans la description qui va être faite d'une poutre conforme à l'invention, avec différentes variantes de forme et de modes de liaison mécanique et de connexion électrique, ainsi que de quelques applications d'une telle poutre.

On se reportera aux dessins annexés dans lesquels :
- la figure 1 est une vue en perspective d'un premier exemple de poutre électrifiée conforme à l'invention,
- la figure 2 est une vue en perspective d'un deuxième exemple de poutre conforme à l'invention,
- les figures 3 et 4 illustrent une application des poutres électrifiées à l'éclairage d'un tunnel,
- la figure 5 est une vue des poutres utilisées dans cette application,
- la figure 6 est une vue de détail du raccordement de ces poutres,
- la figure 7 illustre la fixation des poutres sous la voûte du tunnel,
- la figure 8 est une vue de détail d'une platine de fixation des poutres
- la figure 9 illustre une deuxième application de la poutre selon l'invention comme câbles anti feu autoportants en fixation murale,
- la figure 10 est une vue de la poutre utilisée dans cette application,
- la figure 11 est une vue de détail du raccordement des poutres dans cette application,
- la figure 12 illustre une troisième application de la poutre selon l'invention comme élément structurel de réalisation d'un abribus,
- la figure 13 illustre une quatrième application de la poutre selon l'invention comme élément structurel de réalisation d'un revêtement de façade de bâtiment,
- la figure 14 est une vue en perspective d'une structure préfabriquée utilisable pour une telle quatrième application constituée de poutres électrifiées conformes à l'invention,
- la figure 15 montre la jonction d'une telle poutre avec d'autres profilés,
- la figure 16 montre l'assemblage de deux profilés bout à bout,
- la figure 17 représente une pièce de jonction utilisée dans cet assemblage
- la figure 18 illustre un autre exemple de liaison bout à bout des poutres, pour assurer une protection de la jonction dans le cas d'une disposition verticale des poutres,
- la figure 19 montre une jonction des poutres dans le cas ou les poutres utilisées servent également de conduit pour un passage de fluide,
- les figures 20 à 23 montrent quatre exemples d'implantation d'inserts conducteurs de section pleine dans une poutre constituée d'un profilé creux,
- les figures 24 et 25 montrent deux exemples d'implantation d'inserts conducteurs de section tubulaire cylindrique ouverte dans une poutre constituée d'un profilé creux,
- la figure 26 montre trois exemples de d'inserts de section de forme générale trapézoïdale,
- la figure 27 montre un exemple d'implantation d'inserts conducteurs de section tubulaire trapézoïdale ouverte,
- la figure 28 représente un exemple de connecteur électrique raccordé sur la poutre de la figure 27
- la figure 29 représente un autre exemple de connecteur électrique raccordé sur une poutre rectangulaire comportant des inserts conducteurs pleins,
- la figure 30 illustre une réalisation de la poutre avec des inserts conducteurs affleurants intérieurement,
- la figure 31 est une vue de détail montrant un exemple de connexion électrique bout à bout entre les inserts de deux poutres alignées au moyen d'une goupille fendue placée dans un forage axial de l'insert,
- la figure 32 est une vue de détail montrant un exemple de connexion électrique bout à bout entre les inserts de deux poutres alignées au moyen d'une goupille fendue placée autour des extrémités des inserts.

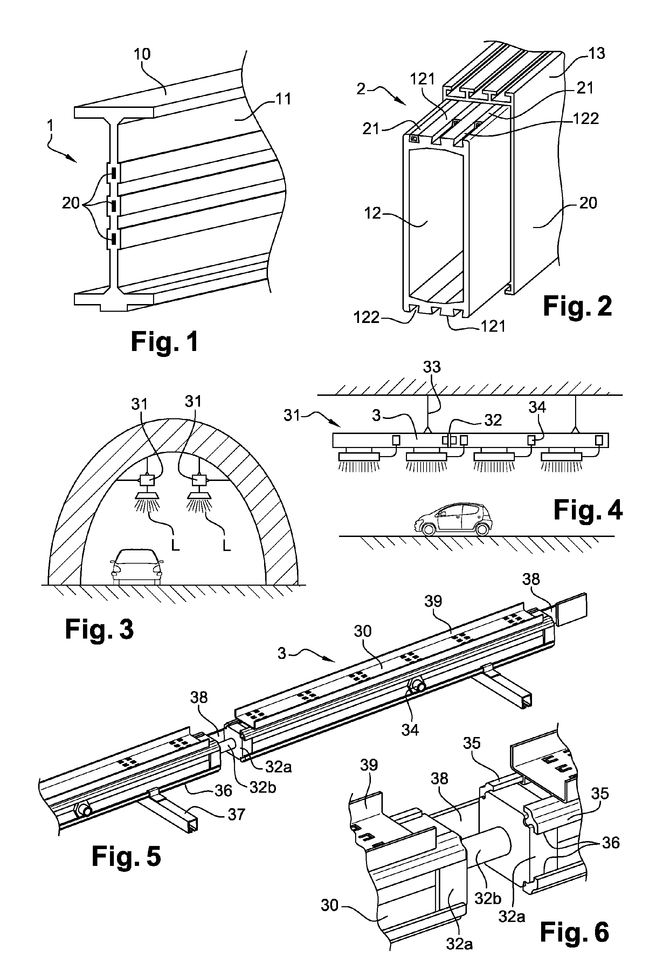

La poutre électrifiée 1 représentée figure 1 est formée d'un profilé pultrudé 10 présentant une section de forme générale en I comportant une âme 11 et des inserts conducteurs 20 plats sont noyés dans ladite âme. Le profilé pourrait aussi avoir une section en T, H etc. et des inserts placés dans d'autres parties que l'âme.

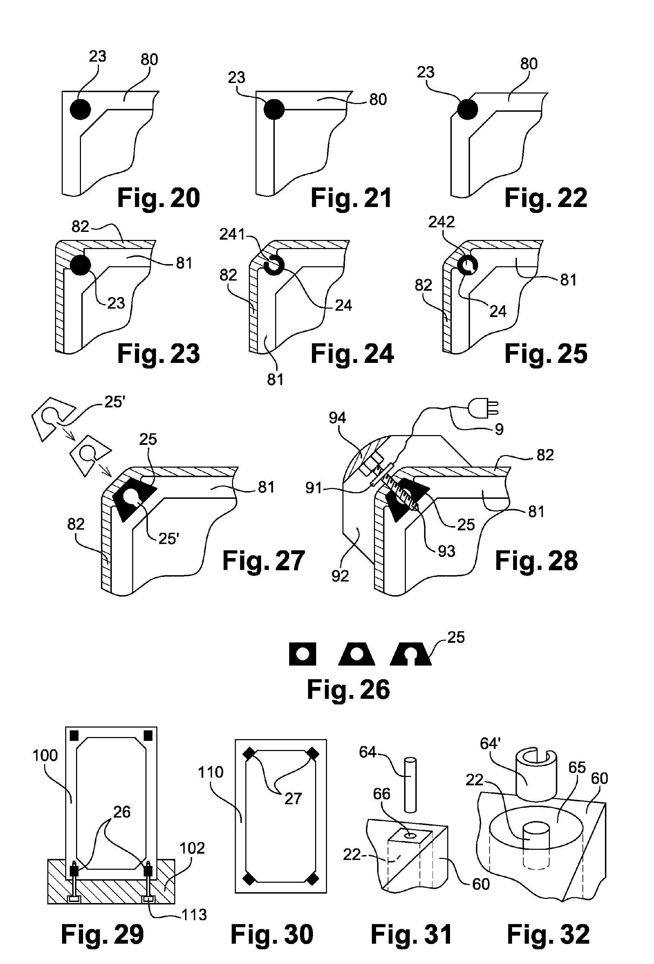

La poutre électrifiée 2 représentée figure 2 est formée d'un profilé 20 comprenant un pré-profilé 12 pultrudé et une couche de plastique 13 co-extrudée. Le pré-profilé pultrudé creux 12, de section générale sensiblement rectangulaire comportent sur ses faces 121 des rainures 122 formées lors de la pultrusion. Des inserts conducteurs 21 de section sensiblement rectangulaire sont placés dans les rainures 122, sensiblement affleurantes sur les dites faces 121. Les inserts conducteurs 21 sont creux, et leurs faces latérales sont préférentiellement légèrement inclinées (voir figure 26), pour former une section légèrement trapézoïdale déformable permettant le maintien des inserts par clipsage dans les rainures. L'ensemble est recouvert d'une couche de plastique 13 co-extrudée, qui enrobe le pré-profilé 12 et les inserts et y adhère, assurant ainsi l'isolation électrique et l'étanchéité des inserts, et constituant la poutre électrifiée 2 terminée. Avantageusement, la couche de plastique 13 a des propriétés de retardateur de flamme.

La figure 3 est une vue schématique en coupe d'un tunnel comportant des lampes L portées par deux ensembles linéaires 31 de poutres 3 selon l'invention, reliées électriquement bout à bout par des jonctions 32. Ces ensembles sont fixés à la paroi du tunnel par des suspentes 33, distantes par exemple de 1 à 6 mètres, et les lampes L sont fixées sur les poutres et raccordées électriquement sur celles-ci par des connecteurs 34.

Un exemple typique de poutre utilisé dans une telle application est représenté figure 5. La poutre est formée d'un profilé pultrudé 30 de section carrée, incorporant les inserts conducteurs par exemple à proximité des angles 35 dudit profilé. Par ailleurs, ces angles forment, du côté extérieur, des glissières 36 permettant d'y adapter d'une part des platines 33a des suspentes 33 et d'autre part des supports 37 de fixation des lampes, et ceci de manière librement ajustable par simple coulissement sur lesdites glissières. De même, les connecteurs 34 sont réglables en position par coulissement. De plus, ces glissières 36 reçoivent, au niveau des jonctions entre poutres, des éclisses coulissantes 38, qui assurent l'alignement des poutres tout en permettant des variations de l'espacement entre celles-ci, espacement nécessaire pour absorber les dilatations des ensembles 31 pouvant s'étendre sur de très grandes longueurs.

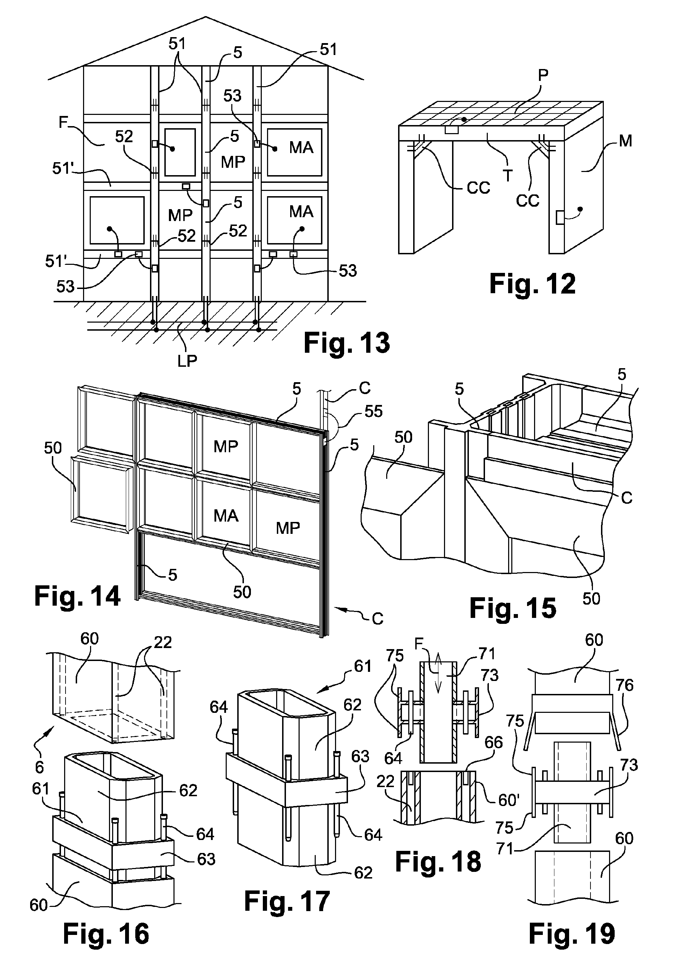

Les jonctions 32 entre poutres comportent deux blocs de raccordement 32a reliés par une gaine fexible 32b de manière à pouvoir absorber une légère courbure du tunnel. Elles sont pré câblées en usine de manière à assurer, lors de l'insertion des blocs 32a dans la poutre pendant la phase d'installation réalisée sur site, une connexion électrique rapide et immédiate, par exemple par un contact bout à bout comme représenté figures 16 ou par un contact latéral si les conducteurs sont affleurant à l'intérieur du profilé comme montré figure 21..

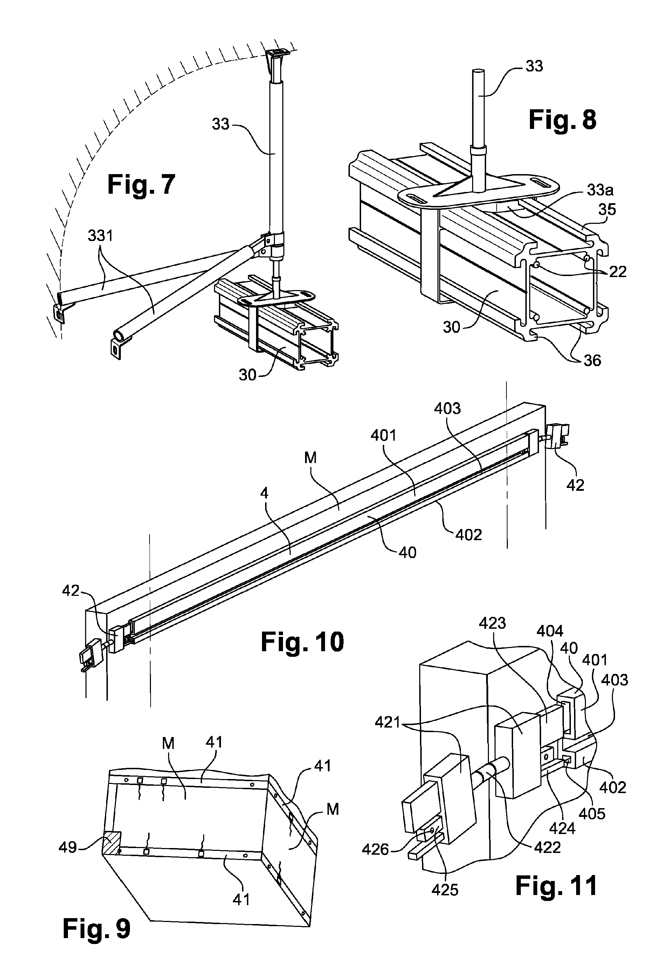

Les figures 7 et 8 montrent le système de fixation des poutres sur la paroi du tunnel, au moyen des suspentes 33 et de bracons 331 réglables.

Les profilés 30 sont réalisés en un matériau composite résistant au feu au moins 30 minutes, par exemple en résine phénolique renforcée de fibre de verre.

Accessoirement, les poutres 3 peuvent aussi supporter des chemins de câbles 39 de type connu.

Les figures 9 à 11 illustrent une autre application des poutres selon l'invention, en montage mural. Dans cette application, les poutres électrifiées 4 peuvent être considérées comme un câble rigide autoporteur anti-feu, d'installation facile et ne nécessitant pas de support, particulièrement utilisable pour une traversée de zone à risque d'incendie. Les poutres 4 peuvent être installées, comme indiqué figure 9, en lignes 41 reliées à une armoire électrique 49 et fixées en partie haute et/ou en partie basse des cloisons M. La figure 10 montre de manière plus détaillée une poutre 4 fixée sur une cloison M dans une zone à risque de feu, et dont les extrémités sont raccordées à d'autres poutres similaires par des connecteurs électriques 42 spécifiques. Les poutres 4 sont ici constituées d'un profilé pultrudé plat 40 en matériau résistant au feu avec des inserts conducteurs, non représentés, noyés dans la masse. Le profilé comporte une zone supérieure 401 dans laquelle sont noyés les conducteurs de phases et de neutre, et une zone inférieure 402 pour le conducteur de terre, ces deux zones étant séparées par une rainure 403 constituant une zone de fixation murale.

Les connecteurs 42 sont constitués de deux pièces de connexion 421 reliées par un élément de câble 422 non rigide. Les pièces de connexion 421 comportent des parties mâles 423, 424 prévues pour s'insérer dans des extrémités évidées 404, 405 du profilé 40, pour assurer le contact électrique avec les inserts conducteurs noyés partiellement dans le profilé et affleurant dans la cavité intérieure. Les pièces de connexion 421 comportent également une patte 425 prévue pour s'engager dans la rainure 403 et comportant un trou de fixation 426.

La figure 12 illustre une autre application des poutres selon l'invention, pour un abribus comportant deux parois M portant par exemple des affiches lumineuses et un toit T portant des panneaux solaires P. Les poutres selon l'invention forment les pièces structurelles de l'abribus, sur lesquelles les panneaux solaires et les affiches lumineuses sont directement raccordés. Des cornières convecteurs CC sont également adaptables dans les angles entre les parois verticales M et le toit T, et également raccordables électriquement sur les poutres électrifiées.

Les figures 13 à 15 illustrent encore une autre application des poutres électrifiées selon l'invention, pour constituer une armature destinée au revêtement d'une façade F d'un bâtiment par des modules actifs MA tels que par exemple des panneaux solaires producteurs d'énergie électrique ou des modules consommateurs d'énergie électrique tels que par exemple des stores inclinables, qui peuvent être complétés par des modules passifs MP tels que des panneaux de mousse polyuréthanne isolante pour de l'isolation extérieure.

La figure 13 montre une première variante dans laquelle des poutres 5 selon l'invention sont assemblées bout à bout pour former des montants verticaux 51 parallèles électrifiés reliés par des traverses 51' qui peuvent être également constituées de poutres électrifiées ou éventuellement de simples profilés pultrudés. Dans chaque montant 51 les poutres 5 sont assemblées mécaniquement par emboîtement et connectées électriquement par des connecteurs de jonction 52. Tous les montants 51 sont par ailleurs connectés électriquement sur une ligne principale LP s'étendant en bas de façade et qui peut être enterrée. Les modules actifs MA et passifs MP peuvent être fixés directement ou non sur l'armature constituée par les montants 51 et les traverses 51' et connectés électriquement sur les montants et éventuellement sur les traverses par des connecteurs rapportés 53.

La figure 14 montre une autre variante dans laquelle les poutres électrifiées 5 sont préassemblées, éventuellement avec des profilés non électrifiés, pour former des cadres C, sur lesquels sont montés des sous-ensembles modulaires 50, comportant chacun un module actif MA ou passif MP. Les cadres C sont ensuite assemblés pour former le revêtement de façade, les poutres 5 de deux cadres C superposés ou adjacents étant reliées et connectées électriquement, directement bout à bout ou par des connecteurs 55. Chaque ensemble modulaire 50 peut aussi être réalisé sous forme d'un cadre constitué de profilés similaires, électrifiés ou non, sur lesquels lesdits modules passifs ou actifs sont fixés. Ce système permet de réaliser des ensembles ou sous-ensembles préfabriqués qu'il suffit d'assembler simplement les uns à côté ou au-dessus des autres pour réaliser très rapidement un revêtement de façade comportant des éléments actifs, générateurs ou consommateurs d'électricité, sans besoin de câblage électrique complémentaire à faire in situ. On notera aussi que dans cette variante, les ensembles modulaires 50 peuvent avoir des dimensions différentes, sous réserve de respecter un pas déterminé commun à tous les ensembles modulaires.

Les figures 16 et 17 montrent un exemple de liaison bout à bout des poutres électrifiées selon l'invention. Dans cet exemple, les poutres 6 sont formées de profilés creux 60 de section rectangulaires en matériau composite comportant des inserts conducteurs 22 placés dans les angles et noyés dans la masse du matériau composite. Les poutres sont reliées par une pièce de liaison 61 isolante de section rectangulaire comportant deux embouts 62 de forme adaptée pour s'insérer respectivement dans les extrémités de deux profilés 60 à assembler.

Une partie médiane 63, située entre les embouts 62, a une section de dimensions extérieures correspondant à celles des profilés et comporte dans ses angles des goupilles fendues conductrices 64 qui assurent le contact électrique avec les inserts 22 lorsque les embouts sont emmanchés dans les profilés. Comme illustré figures 31 et 32, ce contact électrique peut être obtenu soit par insertion des goupilles fendues 64 dans des trous 66 forés axialement dans les extrémités des inserts 22, soit par insertion des goupilles fendues 64' autour des extrémités des inserts 22, auquel cas un lamage 65 est réalisé dans le profilé autour des extrémités des inserts pour permettre le passage de la goupille.

La figure 18 illustre une variante de liaison entre poutres électrifiées bout à bout, dans laquelle la liaison mécanique entre les profilés est assurée de manière similaire au cas précédent par une pièce de liaison 71. De plus, cette pièce peut être creuse, comme celle représentée figure 17, pour permettre une circulation d'un fluide (flèche F) à l'intérieur des poutres assemblées. En complément, la partie médiane 73 portant les goupilles conductrices 64 comporte un joint d'étanchéité périphérique 75 qui recouvre par l'extérieur la partie d'extrémité 60' du profilé 60 lorsque la pièce de liaison est insérée dans l'extrémité du profilé. En complément, dans le cas d'un assemblage vertical des poutres, représenté figure 19, une jupe d'étanchéité 76 peut être adaptée sur l'extrémité inférieure de la poutre supérieure pour recouvrir toute la jonction après assemblage, et éviter ainsi tout risque de pénétration d'humidité par ruissellement.

Les figures 20 à 25 montrent différentes possibilités, non limitatives, de localisation des inserts dans la section d'un profilé :
- Figure 20 : un insert rond 23 de section pleine est noyé complètement dans la matière composite d'un profilé 80 dans un angle de celui-ci, pendant la pultrusion ou l'extrusion du profilé,
- Figure 21 : un insert rond 23 de section pleine est noyé partiellement dans la matière composite du profilé creux 80 dans un angle de celui-ci, et affleurant à l'intérieur du profilé,
- Figure 22 : un insert rond 23 de section pleine est noyé partiellement dans la matière composite du profilé dans un angle de celui-ci, et affleurant à l'extérieur du profilé,
- Figure 23 : un insert rond 23 de section pleine est placé dans une rainure formée par pultrusion dans l'angle extérieur d'un pré-profilé pultrudé 81, et une couche de plastique 82 déposée ensuite par co-extrusion recouvre l'ensemble,
- Figure 24 : un insert creux 24 de section arrondie et fendu longitudinalement est placé dans une rainure formée par pultrusion dans l'angle extérieur d'un pré-profilé pultrudé 81, la fente 241 de l'insert étant orientée vers l'extérieur, et une couche de plastique 82 déposée ensuite par co-extrusion recouvre l'ensemble, en pénétrant dans l'insert creux 24 par la fente 241 de ce dernier,
- Figure 25 : un insert creux 24 de section arrondie et fendu longitudinalement est placé dans une rainure formée par pultrusion dans l'angle extérieur d'un pré-profilé pultrudé 81, la fente 241 de l'insert étant orientée vers l'intérieur, et une couche de plastique 82 déposée ensuite par co-extrusion recouvre l'ensemble. Dans ce cas, l'insert 24 est déjà maintenu par clipsage de l'insert dans la rainure et, comme l'insert n'est pas rempli de matière, le trou 242 qui en résulte permet l'insertion d'une goupille de connexion 64 comme indiqué précédemment.

La figure 26 montre trois autres exemples de section d'inserts creux, de forme extérieure polygonale, en particulier carré ou rectangulaire, ou encore trapézoïdale, avec ou sans fente longitudinale.

La figure 27 montre un insert creux 25 en aluminium, acier inoxydable ou cuivre, de section externe trapézoïdale et fendu longitudinalement au milieu de son côté le plus large (soit la base du trapèze), placé dans une rainure de section trapézoïdale correspondante formée par pultrusion dans l'angle extérieur d'un pré-profilé pultrudé 81 La forme trapézoïdale assure le maintien de l'insert 25 dans la rainure, la fente 25' donnant une déformabilité suffisante à l'insert pour l'insérer dans la rainure préformée, comme représenté. Une couche de plastique 82 déposée ensuite par co-extrusion recouvre l'ensemble.

La figure 28 montre un exemple de connexion électrique sur un insert 25 du type représenté figure 27. Un câble électrique 9 de liaison avec un récepteur électrique ou une source de courant est relié à une plaquette conductrice 91, qui peut être prémoulée dans un adaptateur isolant 92 placé sur un angle du profilé. L'adaptateur 92 est fixé par une vis auto-taraudeuse 93 vissée à la fois dans la plaquette 91 et dans l'insert 25, en traversant la couche isolante 82 recouvrant l'insert. Le contact électrique est ainsi assuré par l'intermédiaire de la vis qui assure aussi le serrage de l'adaptateur sur le profilé. Un capot de protection 94 vient ensuite recouvrir la tête de la vis.

La figure 29 montre un autre exemple de connecteur 102 fait d'une seule pièce et assurant simultanément les connexions sur deux inserts conducteurs 26 placés dans deux angles d'un profilé 100, la fixation de ce connecteur pouvant être réalisé comme ci-dessus au moyen de vis auto-taraudeuses 113 visées dans les inserts 26.

La figure 30 est un exemple de profilé creux 110 de section rectangulaire dans lequel des inserts plats 27 sont disposés dans les angles du profilé, affleurant à l'intérieur de celui-ci, les inserts étant placés lors de la pultrusion du profilé.

L'invention n'est pas limitée aux divers exemples de poutres, profilés, inserts, connexion qui ont été décrits précédemment, et on pourra bien sûr combiner différentes variantes décrites ci-dessus sans sortir du cadre de l'invention. De même, les applications décrites ci-dessus ne représentent que des exemples illustratifs des nombreuses possibilités offertes par la mise en oeuvre de poutres conformes à la présente invention.

## Revendications

1. Poutre électrifiée (1, 2, 3, 4, 5), à vocation structurelle, comprenant un profilé (10, 20, 30, etc) en matériau composite pultrudé, la poutre assurant à la fois une fonction mécanique, une fonction de protection feu et une fonction d'électrification par l'intégration de conducteurs électriques au sein de la matière du profilé, sous forme d'un ou plusieurs inserts conducteurs (21 à 25).

2. Poutre électrifiée selon la revendication 1, **caractérisée en ce que** le profilé (20) comporte un pré-profilé (12) formé par pultrusion, ménageant des logements (122) pour les inserts (21), et recouverts de matière plastique ou composite isolante assurant une protection au feu.

3. Poutre électrifiée selon la revendication 1, **caractérisée en ce que** les inserts sont disposés de manière symétrique dans la section du profilé.

4. Poutre électrifiée selon la revendication 1, **caractérisée en ce que** le matériau composite utilisé est constitué majoritairement de fibres de renforts inorganiques et d'une matrice inorganique.

5. Poutre électrifiée selon la revendication 1, **caractérisée en ce que** le matériau composite utilisé est réalisé par mélange de fibres de renforts inorganiques et d'une matrice thermoplastique obtenue par voie réactive.

6. Poutre électrifiée selon la revendication 5, **caractérisée en ce que** le profilé composite est revêtu d'une peinture incombustible formulée préférentiellement à base de géo polymères.

7. Système d'électrification utilisant des poutres électrifiées selon l'une quelconque des revendications précédentes, connectées électriquement entre elles.

8. Système d'électrification selon la revendication 7, **caractérisé en ce que** le raccordement d'appareillage électrique sur les poutres est effectué par vissage au travers du profilé et des inserts conducteurs.

9. Système d'électrification selon l'une quelconque des revendications 7 ou 8, **caractérisé en ce que** les poutres (5) sont utilisées comme éléments structurels électrifiés (C ; 51) pour la réalisation d'un revêtement de façade de bâtiment, comportant des modules électriques actifs (MA) et optionnellement des modules passifs (MP) d'isolation thermique.

10. Système d'électrification selon la revendication 9, **caractérisé en ce que** les poutres électrifiées (5) sont assemblées bout à bout pour former des montants verticaux (51) électrifiés.

11. Système d'électrification selon la revendication 9, **caractérisé en ce que** les poutres électrifiées (5) sont préassemblées, optionnellement avec des profilés non électrifiés, pour former des cadres (C) comportant chacun au moins un module actif ou passif, et les cadres sont assemblés ensuite sur site pour former le revêtement de façade, les cadres étant assemblés entre eux et reliés électriquement entre eux par connexion des poutres entre elles.

12. Système d'électrification selon la revendication 7, **caractérisé en ce qu'il** est utilisé comme élément structurel électrifié résistant au feu pour le supportage et l'alimentation électrique d'appareils d'éclairage de tunnel.

13. Système d'électrification selon la revendication 7, **caractérisé en ce qu'il** est utilisé comme élément structurel électrifié résistant au feu pour la réalisation de câbles anti-feu autoporteurs installés en zone à risque d'incendie.

14. Procédé de fabrication des poutres telles que définies dans l'une quelconque des revendications 1 à 6, **caractérisé en ce que** les poutres sont fabriquées par pultrusion avec introduction in situ des inserts conducteurs dans la matière.

15. Procédé de fabrication des poutres telles que définies dans la revendication 2, **caractérisé en ce qu'il** comprend une étape de pultrusion d'un pré-profilé comportant des logements pour les inserts, une étape d'insertion des inserts conducteurs dans les logements, et une étape de co-extrusion dans laquelle de la matière isolante est injectée de manière à recouvrir les inserts, les trois étapes étant réalisées au défilé en continu sur une même ligne de fabrication.
